# EUROPEAN PATENT SPECIFICATION

(11) **EP 4 331 786 B1**
(45) Date of publication and mention of the grant of the patent: **25.11.2026**
(21) Application number: 23187748.1
(22) Date of filing: 26.07.2023
(51) Int. Cl.: B26B 15/00

(54) **POWER TOOL**
ELEKTROWERKZEUG
OUTIL ÉLECTRIQUE

(30) Priority: 01.09.2022 CN 202211062885
(43) Date of publication of application: 06.03.2024
(73) Proprietor: Nanjing Chervon Industry Co., Ltd., Nanjing, Jiangsu 211106 (CN)
(72) Inventor: NI, Lianghua, Nanjing, Jiangsu (CN); ZHANG, Weiwei, Nanjing, Jiangsu (CN)
(74) Representative: Sun, Yiming

(56) References cited:
- EP-A1- 3 466 578
- US-A- 4 608 754
- US-A1- 2014 182 137
- US-A1- 2018 272 445
- US-A1- 2022 312 680

## Description

### TECHNICAL FIELD

The present application relates to a power tool and, in particular, to a shearing device.

### BACKGROUND

A shearing device can cut objects such as branches and pipes, and the pipes include electric wires, water tubes, and the like. The shearing device is commonly used in an environment such as home and engineering. To meet the requirements of a site environment, an object is cut as required. Most existing shearing devices are hand-operated and have relatively low cutting efficiency for a target object with relatively large hardness. A few electric shearing devices meet the requirement of a user for switching from a manual operation to an electric operation. However, common electric shearing devices have relatively low working efficiency and are inconvenient to operate during operation.

An example of prior art is given by the patent documentation US2018/272445A1.

### SUMMARY

The present application provides a power tool, including a housing including a support portion; a cutting unit for cutting a target object; and a driving device configured to drive the cutting unit, where the cutting unit moves between a first position and a second position relative to the support portion under the action of the driving device. The cutting unit implements a blade lifting motion under the action of the driving device: the cutting unit moves from the first position to the second position. The blade lifting motion includes a first mode and a second mode; in the first mode, a time for the cutting unit to implement the blade lifting motion is a first blade lifting time; and in the second mode, a time for the cutting unit to implement the blade lifting motion is a second blade lifting time; where the first blade lifting time is less than the second blade lifting time.

In some examples, the cutting unit is further configured to implement a cutting motion under the action of the driving device: the cutting unit moves from the second position to the first position. A time for the cutting unit to implement the cutting motion is a cutting time. The cutting time is greater than or equal to the first blade lifting time.

In some examples, the power tool further includes a blade lifting switch configured to be operated such that the blade lifting switch is in a first operation mode and a second operation mode. When the blade lifting switch is in the first operation mode, the blade lifting motion is in the first mode. When the blade lifting switch is in the second operation mode, the blade lifting motion is in the second mode.

In some examples, the housing further includes a handle portion for an operator to hold, and the blade lifting switch is disposed on the handle portion.

In some examples, the blade lifting switch penetrates through the handle portion, and two ends of the blade lifting switch extend out from two sides of the handle portion separately.

In some examples, the blade lifting switch includes a first blade lifting switch and a second blade lifting switch. When the first blade lifting switch is turned on, the blade lifting switch is in the first operation mode and the blade lifting motion is in the first mode. When the second blade lifting switch is turned on, the blade lifting switch is in the second operation mode.

In some examples, when the blade lifting switch is at an original position, the blade lifting switch is in an off state. When the blade lifting switch is at a third position, the blade lifting motion is in the first mode. When the blade lifting switch is at a fourth position, the blade lifting motion is in the second mode.

In some examples, the original position is in the middle of the third position and the fourth position, or the fourth position is in the middle of the third position and the original position.

In some examples, when the blade lifting switch is in an original state, the blade lifting switch is in an off state. When the blade lifting switch is turned on once, the blade lifting motion is in the second mode. When the blade lifting switch is continually turned on at least twice, the blade lifting motion is in the first mode.

In some examples, the power tool further includes a transmission device for connecting the driving device to the cutting unit. The driving device drives, via the transmission device, the cutting unit to implement the blade lifting motion, where the number of transmission stages of the transmission device in the first mode is less than the number of transmission stages of the transmission device in the second mode.

In some examples, the driving device further includes an electric motor. The electric motor has first power in the first mode. The electric motor has second power in the second mode. The first power is greater than the second power.

In some examples, the ratio of the first blade lifting time to the second blade lifting time is greater than or equal to 0.1 and less than 1.

In some examples, the first blade lifting time is less than or equal to 1s.

In some examples, the power tool further includes a controller configured to cause, according to a mode of the blade lifting motion, the driving device to stop within a preset ending time. In the first mode, the preset ending time is equal to the first blade lifting time. In the second mode, the preset ending time is equal to the second blade lifting time.

In some examples, the power tool further includes a battery pack for powering the driving device, where the higher a voltage of the battery pack, the shorter the preset ending time.

A second aspect of the present application provides a power tool, including a cutting unit for cutting a target object; and a housing including a support portion for supporting the target object. The cutting unit is configured to be movable relative to the support portion to a first position and a second position, and the cutting unit implements a blade lifting motion when moving from the first position to the second position. The blade lifting motion includes a first mode and a second mode; in the first mode, a time for the cutting unit to implement the blade lifting motion is a first blade lifting time; and in the second mode, a time for the cutting unit to implement the blade lifting motion is a second blade lifting time; where the first blade lifting time is less than the second blade lifting time.

In some examples, a ratio of the first blade lifting time to the second blade lifting time is greater than or equal to 0.1 and less than 1.

In some examples, a ratio of the first blade lifting time to the second blade lifting time is greater than or equal to 0.2 and less than 0.5.

In some examples, the first blade lifting time is less than or equal to 1s.

A third aspect of the present application provides a power tool, including a cutting unit for cutting a target object; and a housing including a support portion for supporting the target object. The cutting unit is configured to be movable relative to the support portion to a first position and a second position, and the cutting unit implements a blade lifting motion when moving from the first position to the second position. The blade lifting motion includes a first mode and a second mode; in the first mode, the cutting unit implements the blade lifting motion at a first blade lifting speed; and in the second mode, the cutting unit implements the blade lifting motion at a second blade lifting speed; where the first blade lifting speed is greater than the second blade lifting speed.

### BRIEF DESCRIPTION OF DRAWINGS

FIG. 1 is a structural view of a power tool in example one of the present application;
FIG. 2 is an exploded view of the power tool in the example shown in FIG. 1;
FIG. 3 is a top view of the power tool in the example shown in FIG. 1;
FIG. 4 is a cross-sectional view of an A-A plane when a brake assembly is at a first braking position in the example shown in FIG. 1;
FIG. 5 is a cross-sectional view of an A-A plane when a brake assembly is at a second braking position in the example shown in FIG. 1;
FIG. 6 is a sectional view of a B-B plane in FIG. 3;
FIG. 7 is a cross-sectional view of a C-C plane in FIG. 3;
FIG. 8 is an exploded view illustrating an internal structure of the power tool in the example shown in FIG. 1 from a first perspective;
FIG. 9 is an exploded view illustrating an internal structure of the power tool in the example shown in FIG. 1 from a second perspective;
FIG. 10 is an exploded view illustrating an internal structure of the power tool in the example shown in FIG. 1 from a third perspective;
FIG. 11 is a structural view of a power tool in example two of the present application; and
FIG. 12 is a structural view of a power tool in example three of the present application.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance.

In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" " and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

The present application provides a power tool. The power tool may be used for cutting an object such as a pipe and branches and leaves. Specifically, the power tool may be electric pipe shears suitable for cutting pipes with various diameters and of various materials in scenarios such as home and engineering. A transmission device 30 is used for connecting a driving device 40 to a cutting unit 20, and a housing 11 is used for accommodating at least part of the cutting unit 20, the transmission device 30, and the driving device 40.

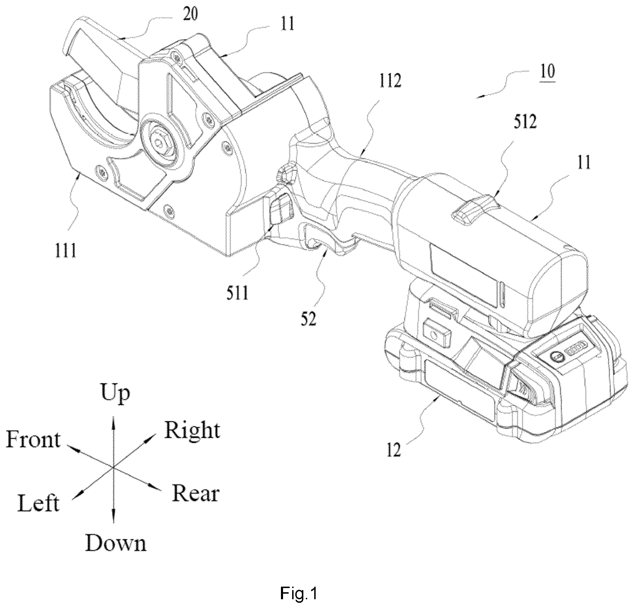

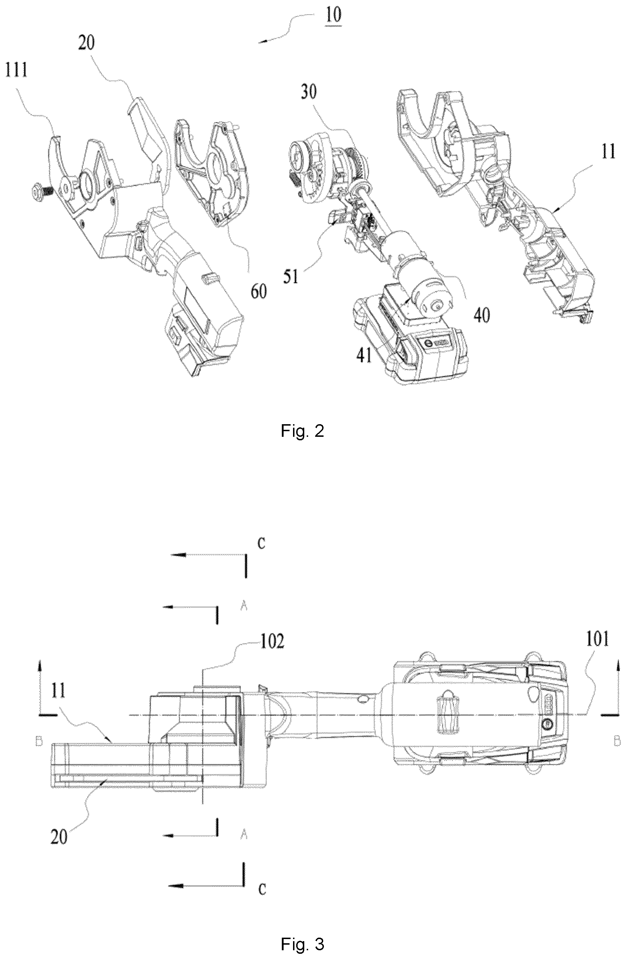

As shown in FIGS. 1 and 2, a power tool 10 may be the electric pipe shears and includes the housing 11, the cutting unit 20, the driving device 40, and a battery pack 12. The housing 11 may include a support portion 111 and a handle portion 112. The cutting unit 20 is used for cutting a target object, the support portion 111 is configured to support the target object, the driving device 40 is used for driving the cutting unit 20, and the battery pack 12 is used for powering the driving device 40. The housing 11 is used for accommodating at least part of the cutting unit 20 and the driving device 40. The battery pack 12 is connected to the handle portion 112. Optionally, the power tool 10 may also include the transmission device 30 for connecting the driving device 40 to the cutting unit 20. The battery pack 12 is detachably connected to the handle portion 112, and several switches or switch assemblies are disposed on the housing 11. In other examples, the power tool 10 may be alternating current pipe shears, which is not limited herein.

The support portion 111 is used for cutting the object such as the pipe in collaboration with the cutting unit 20. Specifically, the support portion 111 may be a fixed blade, and the cutting unit 20 may be a moving blade. The support portion 111 may also include at least one curved surface or groove, where the curved surface or the groove is opposite to the cutting unit 20 such that the support portion 111 is located on one side of a pipe to be cut, the cutting unit 20 is located on the other side of the pipe to be cut, and the support portion 111 abuts against an outer wall of the pipe. The groove of the support portion 111 is used for accommodating the cutting unit 20 after a cutting motion. Optionally, an opening of the groove faces the cutting unit 20, and the width of the groove is slightly greater than the width of the cutting unit 20.

The cutting unit 20 may be drivingly connected to the driving device 40 and move between a first position and a second position relative to the support portion 111 under the action of the driving device 40 to implement a blade lifting motion and the cutting motion. The blade lifting motion is a motion of the cutting unit 20 from the first position to the second position, that is, an upward blade lifting action is completed in this example. The cutting motion is a motion of the cutting unit 20 from the second position to the first position, that is, a downward cutting action is completed in this example.

The housing 11 is used for accommodating the driving device 40 and at least part of the cutting unit 20. The driving device 40 may include an electric motor 41, which may specifically be a brushed motor or a brushless motor. The power of the electric motor 41 may be 150 W to 200 W.

In some examples, the blade lifting motion of the cutting unit 20 includes a first mode and a second mode. In the first mode, a time for the cutting unit 20 to implement the blade lifting motion is a first blade lifting time t1. In the second mode, a time for the cutting unit 20 to implement the blade lifting motion is a second blade lifting time t2. The first blade lifting time t1 is less than the second blade lifting time t2.

The electric pipe shears perform the blade lifting motion before cutting the target object. Only when the blade lifting motion is completed, can an operator cut the target object. However, in different working environments, the operator has different requirements on a blade lifting time. The electric pipe shears having two different working modes can meet different requirements of the operator, have high cutting efficiency, and are convenient to operate.

As shown in FIGS. 1 and 2, the power tool 10 further includes a blade lifting switch 51 configured to be operated such that the blade lifting switch 51 is in a first operation mode and a second operation mode. When the blade lifting switch 51 is in the first operation mode, the blade lifting motion is in the first mode. When the blade lifting switch 51 is in the second operation mode, the blade lifting motion is in the second mode.

As shown in FIG. 2, the power tool 10 further includes the transmission device 30. The transmission device 30 is used for connecting the driving device 40 to the cutting unit 20. Power provided by the driving device 40 is transferred to the cutting unit 20 via the transmission device 30, so as to implement the blade lifting motion or the cutting motion. The transmission device 30 may include a gearset, and the driving device 40 drives, via the gearset, the cutting unit 20 to implement the blade lifting motion. The number of transmission stages of the transmission device 30 in the first mode is less than the number of transmission stages of the transmission device 30 in the second mode.

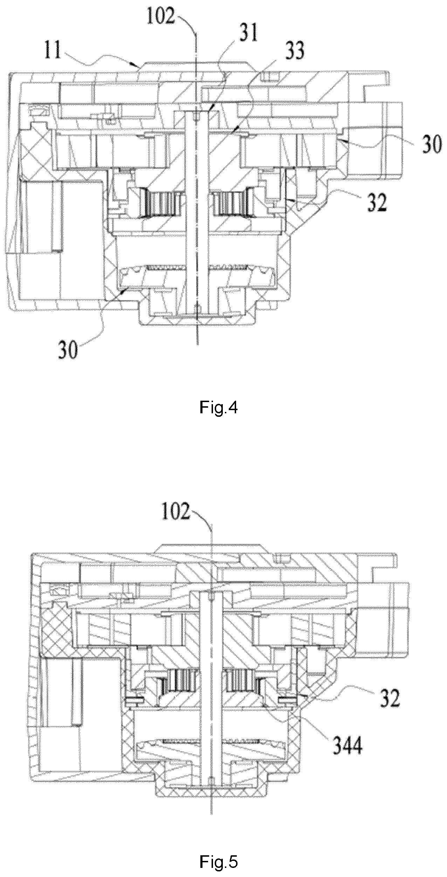

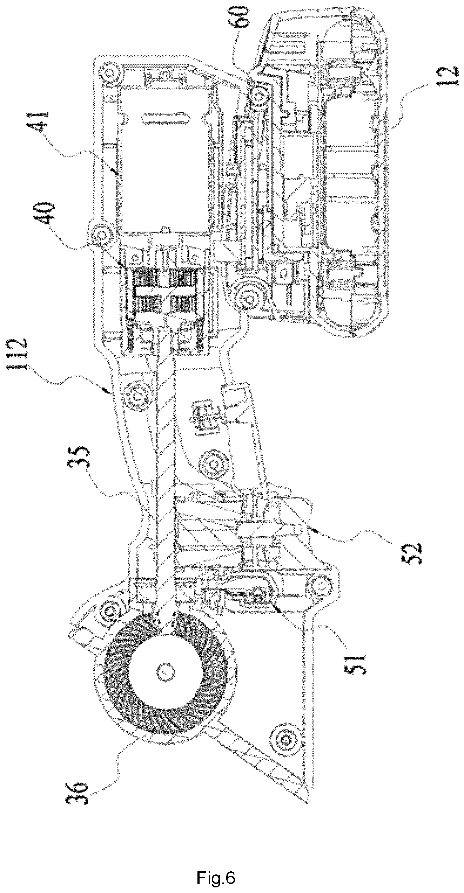

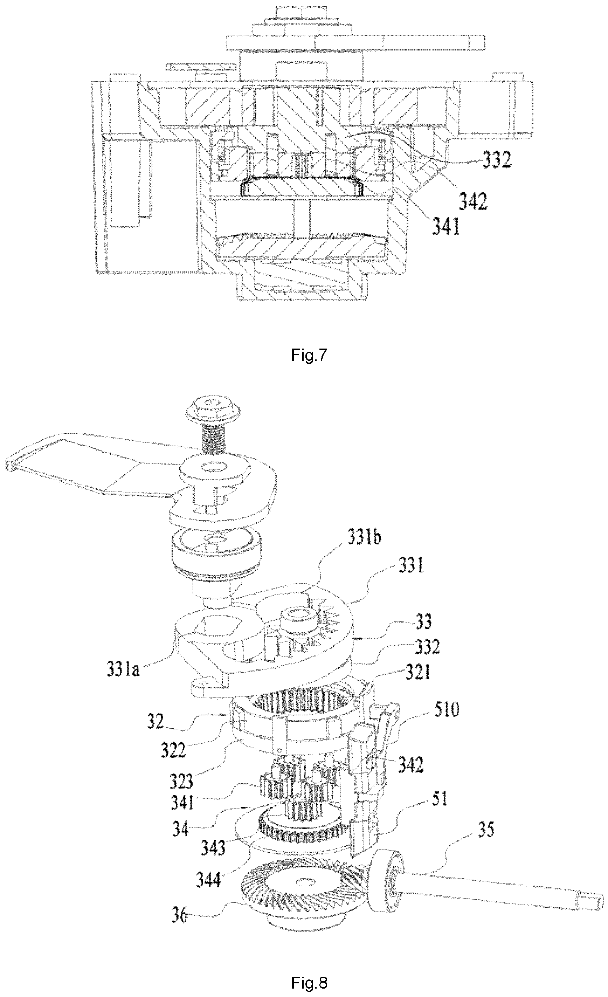

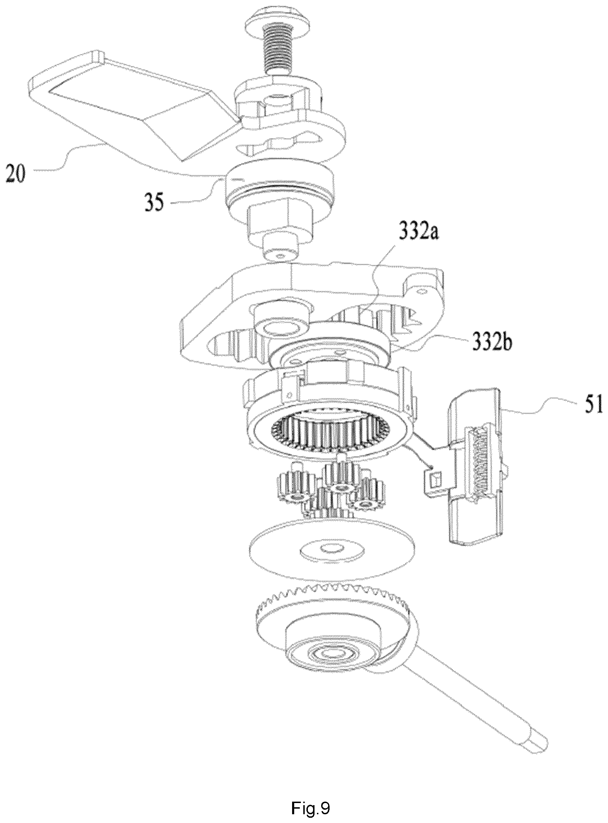

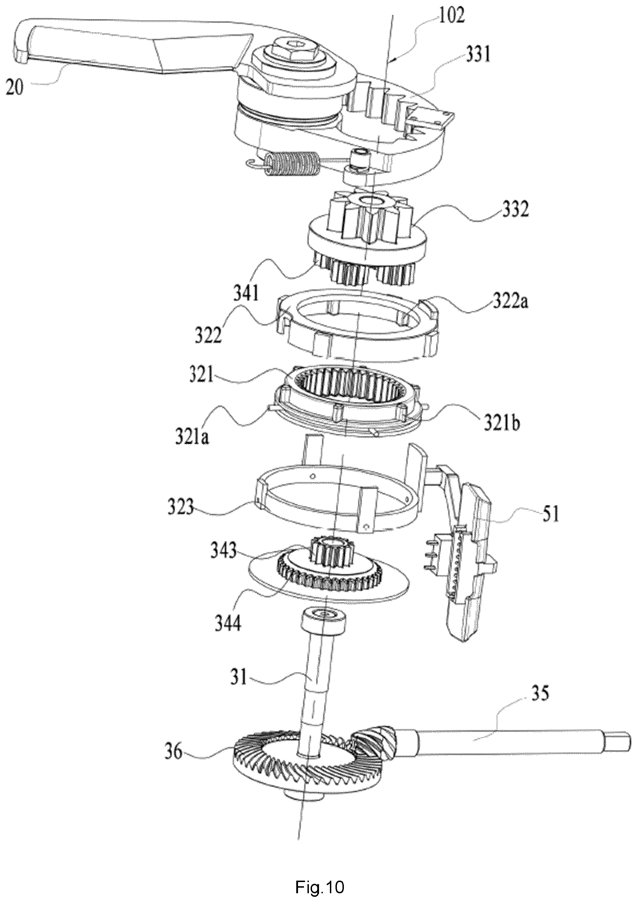

As shown in FIGS. 3 to 10, the transmission device 30 may include an output shaft 31, a brake assembly 32, an output gear assembly 33, a planet gear assembly 34, a drive shaft 35, and a transmission gear 36. The output shaft 31 is disposed along a second axis 102 in the handle portion 112. Both the output gear assembly 33 and the brake assembly 32 are directly or indirectly connected to the output shaft 31.

The output gear assembly 33 includes an output inner ring gear 331 and an output gear 332 disposed on the output shaft 31. One end of the output gear 332 is connected to the output inner ring gear 331, and the brake assembly 32 is disposed at an end of the output gear 332. Specifically, the output inner ring gear 331 in this example is in the shape of a sector and includes an output hole 331a and a ring gear portion 331b, where the ring gear portion 331b has an arc-shaped segment of teeth and meshes with the output gear 332. Further, the output gear 332 is a stepped secondary gear, that is, includes a gear portion 332a and a transmission portion 332b, where the gear portion 332a meshes with the ring gear portion 331b. In some examples, the diameter of the gear portion 332a is smaller than the diameter of the transmission portion 332b such that a lower edge of the output inner ring gear 331 abuts against a surface of the transmission portion 332b.

The output gear assembly 33 is drivingly connected to the planet gear assembly 34, and the planet gear assembly 34 is connected to the output shaft 31. Specifically, the planet gear assembly 34 includes several planet gears 341 and several rotating shafts 342 each disposed at the center of a respective planet gear 341, where a first sun gear 343 meshes at the center of the planet gears 341. The lower end of a rotating shaft 342 is connected to the planet gear 341, and the upper end of the rotating shaft 342 is fixed to the transmission portion 332b so that the output gear 332 rotates with the shown planet gears 341 in a certain state. In this example, to achieve the preceding transmission, four planet gears and four rotating shafts are disposed. In other examples, other numbers may be set, or a gear train other than the planet gears may be used instead, which is not limited herein.

Further, the first sun gear 343 is disposed on the output shaft 31 and driven by the output shaft 31 to rotate, and a second sun gear 344 is disposed below the first sun gear 343. The diameter of the second sun gear 344 is greater than the diameter of the first sun gear 343 and is greater than the diameter of an outer circumference of all the planet gears 341. The first sun gear 343 and the second sun gear 344 are fixedly connected, or the first sun gear 343 and the second sun gear 344 are integrally formed. The first sun gear 343 and the second sun gear 344 are fixedly connected to the output shaft 31, the planet gears 341 mesh with the first sun gear 343, and the planet gears 341 also mesh with a ring gear 321. The planet gears 341 are also rotatably disposed on the output gear 332 through the rotating shafts 342, the output gear 332 is rotatably mounted to the output shaft 31, and the output gear 332 outputs power to drive the cutting unit 20 to move.

The brake assembly 32 includes a fixing ring and a braking inner ring gear 321, the fixing ring is connected to the braking inner ring gear 321, and part of the structure of the brake assembly 32 moves between a first braking position and a second braking position. The second sun gear 344 is drivingly connected to the brake assembly 32 under certain circumstances. Specifically, when the brake assembly 32 is at the second braking position, the second sun gear 344 meshes with the braking inner ring gear 321. The upper surface of the second sun gear 344 is curved, or the upper end of a gear portion of the second sun gear 344 is inclined at a certain angle to ensure that teeth of the braking inner ring gear 321 more easily mesh with teeth of the second sun gear 344 when the brake assembly moves up and down. Specifically, in this example, the fixing ring includes a first fixing ring 322 and a second fixing ring 323, the second fixing ring 323 is sleeved on the first fixing ring 322 and the braking inner ring gear 321, the first fixing ring 322 and the braking inner ring gear 321 are arranged in parallel, the first fixing ring 322 is disposed above the braking inner ring gear 321, and the first fixing ring 322 is fixed to another structure of the transmission device 30 or the housing 11 to implement a limiting function. The first fixing ring 322 is fixed relative to the housing 11. The ring gear 321 is connected to the second fixing ring 323 through connectors 321a, the second fixing ring 323 drives, via the connectors 321a, the ring gear 321 to move left and right along the second axis 102, and the connectors 321a also allow the ring gear 321 to rotate relative to the second fixing ring 323.

The second fixing ring 323 is connected to the braking inner ring gear 321 through several fixing members 324, and the fixing members 324 penetrate through and bolt the second fixing ring 323 and the braking inner ring gear 321 so that a motion of the second fixing ring 323 drives the braking inner ring gear 321 to move. Further, the inner side of the braking inner ring gear 321 is filled with teeth from top to bottom, the outer side of the braking inner ring gear 321 is stepped, a lower step has a relatively large diameter and is provided with grooves for connecting the fixing members 324, an upper step is connected to the inner side of the first fixing ring 322, and the first fixing ring 322 is disposed between the upper step and the second fixing ring 323 so that the first fixing ring 322, the upper step, and the second fixing ring 323 are closely connected. In this example, the brake assembly 32 moves under the action of the blade lifting switch 51. In other examples, a motion of the brake assembly 32 may be directly controlled by a controller 60 instead of being controlled through the blade lifting switch 51.

The transmission gear 36 is drivingly connected to the driving device 40 through the drive shaft 35. One end of the drive shaft 35 is connected to the transmission gear 36, and the other end of the drive shaft 35 is connected to the driving device 40. The drive shaft 35 is disposed substantially along a first axis 101. The transmission gear 36 is disposed on the output shaft 31 and fixedly connected to the output shaft 31. A tooth face of the transmission gear 36 is tapered, and the tapered tooth face meshes with a tapered portion at an end of the drive shaft 35.

The drive shaft 35 is fixedly connected to the tapered portion, the output shaft 31 is fixedly connected to the transmission gear 36, and the transmission gear 36 mates with the tapered portion so that the drive shaft 35 can drive the output shaft 31 to move at a first rotational speed. The first sun gear 343 and the second sun gear 344 are fixedly connected to the output shaft 31, the planet gears 341 mesh with the first sun gear 343, and the planet gears 341 also mesh with the ring gear 321. The planet gears 341 are also rotatably disposed on the output gear 332 through the rotating shafts 342, the output gear 332 is rotatably mounted to the output shaft 31, and the output gear 332 outputs power to drive the cutting unit 20 to move. The first fixing ring 322 is fixed relative to the housing 11. The ring gear 321 is connected to the second fixing ring 323 through the connectors 321a, the second fixing ring 323 drives, via the connectors 321a, the ring gear 321 to move left and right along the second axis 102, and the connectors 321a also allow the ring gear 321 to rotate relative to the second fixing ring 323.

The blade lifting switch 51 is connected to the second fixing ring 323 through a connecting rod 510. When the blade lifting switch 51 is in the first operation mode, the blade lifting switch 51 drives the second fixing ring 323 and the ring gear 321 to move right to the second braking position, and at this time, inner teeth of the ring gear 321 mesh with the second sun gear 344. When the blade lifting switch 51 is in the second operation mode, the blade lifting switch 51 drives the second fixing ring 323 and the ring gear 321 to move left to the first braking position. At this time, the ring gear 321 is disengaged from the second sun gear 344, locking portions 321b outside the ring gear 321 mate with mating portions 322a formed on the first fixing ring 322, and the ring gear 321 is fixed relative to the first fixing ring 322 so that the first sun gear 343, the planet gears 341, the ring gear 321, and the output gear 332 constitute a planetary gear train having a non-zero reduction ratio.

When the blade lifting switch 51 is in the second operation mode, the ring gear 321 is at the first braking position, the ring gear 321 is disengaged from the second sun gear 344 and fixed relative to the first fixing ring 322, and the planetary gear train composed of the first sun gear 343, the planet gears 341, the ring gear 321, and the output gear 332 has a deceleration function. At this time, the driving device 40 drives the output shaft 31 to rotate at the first rotational speed and causes the output gear 332 to rotate at a second rotational speed smaller than the first rotational speed under the deceleration action of the planetary gear train so that the cutting unit 20 moves from the first position to the second position at a relatively low second motion speed.

When the blade lifting switch 51 is in the first operation mode, the ring gear 321 is at the second braking position, the ring gear 321 meshes with and rotates synchronously with the second sun gear 344, and the whole composed of the first sun gear 343, the planet gears 341, the ring gear 321, and the output gear 332 has no reduction ratio or has a reduction ratio of 0. In this manner, the driving device 40 drives the output shaft 31 to rotate at the first rotational speed and the output gear 332 also rotates at the first rotational speed so that the cutting unit 20 moves from the first position to the second position at a relatively high first motion speed. The first motion speed is greater than the second motion speed.

As described above, the driving device 40 drives the transmission gear 36 through the drive shaft 35, the transmission gear 36 drives the output shaft 31 to rotate, the output shaft 31 drives the planet gear assembly 34 to rotate, the planet gear assembly 34 drives the output gear assembly 33 to rotate, and the output gear assembly 33 finally outputs power to drive the cutting unit 20 to move. The brake assembly 32 is drivingly connected to the planet gear assembly 34, and the brake assembly 32 may control the planet gear assembly 34 to have a zero or non-zero reduction ratio. When the planet gear assembly 34 has a reduction ratio of 0, the number of transmission stages of the transmission device 30 is N1. When the planet gear assembly 34 has a non-zero reduction ratio, the number of transmission stages of the transmission device 30 is N2. N1 is smaller than N2.

In other examples, the driving device 40 includes the electric motor 41. The electric motor 41 has first power P1 in the first mode. The electric motor 41 has second power P2 in the second mode. The first power P1 is greater than the second power P2. Optionally, P1 may be equal to 200 W and P2 may be equal to 160 W. Specifically, in the first mode and the second mode, the internal structure of the transmission device 30 has no change, and only the power of the electric motor 41 changes so that the motion speed of the cutting unit 20 is driven to change. Compared with the design that a complex mechanical transmission device changes to make the first blade lifting time t1 less than the second blade lifting time t2, the power tool 10 in this example is simple in structure and easy to manufacture.

A time for the cutting unit 20 to implement the cutting motion is a cutting time t3. In some examples, the cutting time t3 is greater than or equal to the first blade lifting time t1. Optionally, the cutting time t3 may be equal to the second blade lifting time t2, or the cutting time t3 may be equal to the first blade lifting time t1.

The cutting motion may adopt the same transmission device as the first mode or the second mode of the blade lifting motion so that the power tool 10 is compact in structure, facilitating the miniaturization and portability of the power tool 10 and reducing a manufacturing cost. Specifically, the electric motor 41 may be controlled to rotate forwardly or reversely, so as to implement the blade lifting motion and the cutting motion of the cutting unit 20. Since the electric motor 41 rotates forwardly or reversely with the same power and the transmission device does not change, the cutting time t3 may be equal to the second blade lifting time t2 or the first blade lifting time t1. Optionally, the cutting motion in this example may include a first cutting motion and a second cutting motion.

The first blade lifting time t1 is less than or equal to 1s. Optionally, the second blade lifting time t2 is less than or equal to 3s. Optionally, the first blade lifting time t1 may be 0.5s or 1s, and the second blade lifting time t2 may be 2s or 3s. The ratio of the first blade lifting time t1 to the second blade lifting time t2 is k1. Optionally, 0.1 ≤ k1 < 1 or 0.2 ≤ k1 ≤ 0.5. Optionally, the value of k1 may be 1/2, 1/3, 1/4, 1/5, or 1/10.

Too long a blade lifting time affects the cutting efficiency of the power tool 10, and too short a blade lifting time results in great danger. After careful researches, the applicant has found that the blade lifting time selected within the above ranges and from the above values can better balance the relationship between working efficiency and safety.

The power tool 10 may also include a main switch 52 for controlling the driving device 40 to start or stop. Optionally, as shown in FIG. 1, the main switch 52 and the blade lifting switch 51 may be disposed on the handle portion 112 to be convenient for a user to operate.

Optionally, as shown in FIG. 2, the driving device 40 may be disposed at the rear end of the handle portion 112, and the cutting unit 20 is movably connected to the front end of the handle portion 112 and is opposite to the support portion 111 in front of the handle portion 112.

Optionally, the blade lifting switch 51 and the main switch 52 may be knob switches, key switches, stroke switches, reset switches, touch switches, or the like. Optionally, the blade lifting switch 51 or the main switch 52 may be one switch or multiple switches. Optionally, the blade lifting switch 51 and the main switch 52 may be different switches to avoid misoperation. Optionally, the blade lifting switch 51 and the main switch 52 may be the same switch to be convenient for the user to operate. For example, if the switch is reset after being pressed, it may be set that the driving device 40 is started when the switch is reset once within a preset time, the second mode is started when the switch is reset once within the preset time with the driving device 40 started, the first mode is started when the switch is reset twice within the preset time with the driving device 40 started, and the driving device 40 is closed when the switch is reset after the preset time with the driving device 40 started.

Optionally, the blade lifting switch 51 penetrates through the handle portion 112 such that two ends of the blade lifting switch 51 extend out from the left and right sides or the upper and lower sides of the handle portion 112 separately. The blade lifting switch 51 penetrates through the handle portion 112 so that the handle portion 112 can shield the blade lifting switch 51 to prevent the blade lifting switch 51 from being started by mistake due to a collision and the like.

The blade lifting switch 51 includes a first blade lifting switch 511 and a second blade lifting switch 512. When the first blade lifting switch 511 is turned on, the blade lifting motion is in the first mode; and when the second blade lifting switch 512 is turned on, the blade lifting motion is in the second mode. Different switches are provided to correspond to the first mode and the second mode separately so that the misoperation of the user can be reduced.

The first blade lifting switch 511 is disposed at an end of the handle portion 112 facing the cutting unit 20, and the second blade lifting switch 512 is disposed at an end of the handle portion 112 facing away from the cutting unit 20. The two switches corresponding to the first mode and the second mode are arranged at two ends of the handle portion 112 separately so that the possibility of misoperation of the user can be further reduced.

A blade lifting speed of the cutting unit 20 in the first mode is greater than a blade lifting speed of the cutting unit 20 in the second mode. Considering safety measures, optionally, in example one, as shown in FIG. 1, the first blade lifting switch 511 penetrates through the handle portion 112 along a left and right direction.

The applicant has found that if the power tool 10 is always in a state of the blade lifting motion or the blade lifting switch 51 is always in an on state, the electric motor 41 always drives a transmission device 30 to run, and thus the transmission device 30 is always in a slippery state, generating noise, abrading the mechanical structure, and impairing the service life of the power tool 10.

The power tool 10 further includes the controller 60 configured to provide feedback for a circuit board according to an on state of the blade lifting switch 51 or a motion state of the cutting unit 20 to control the electric motor 41 to stop within a preset ending time t0: in the first mode, the preset ending time t0 is equal to the first blade lifting time t1; and in the second mode, the preset ending time t0 is equal to the second blade lifting time t2.

Optionally, t0 may be greater than or equal to 1s and less than or equal to 10s. Specifically, t0 may be 1s, 2s, 3s, or 5s.

Optionally, the controller 60 may be configured to set the preset ending time according to an actual working condition or voltage compensation of the battery pack 12. Specifically, as shown in the following table, the controller 60 may set the following relationship between a voltage U of the battery pack 12 and the preset ending time t0: the higher the voltage U of the battery pack 12, the shorter the preset ending time t0.

| | | | | | | | | |
|---|---|---|---|---|---|---|---|---|
| Voltage (V) | 25 | 24 | 23 | 22 | 21 | 20 | 19 | 18 |
| Time (s) | 2.34 | 2.50 | 2.66 | 2.81 | 2.96 | 3.12 | 3.28 | 3.44 |

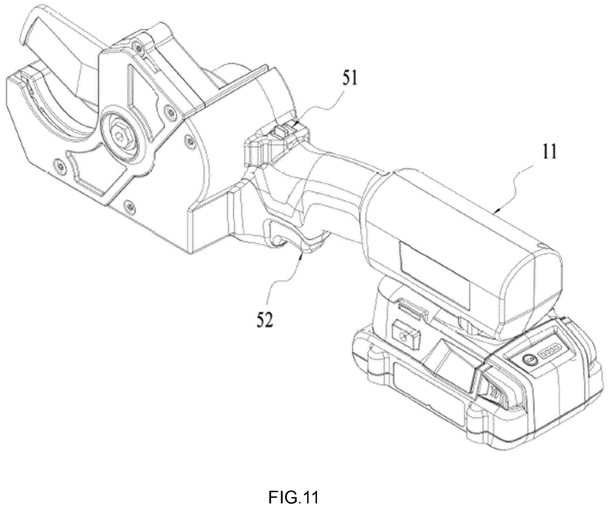

As shown in FIG. 11, components of example two the same as or similar to those of example one use the same reference numerals. For ease of description, only differences with example one are described in example two.

In some examples, as shown in FIG. 11, the blade lifting switch 51 may be a stroke switch or a knob switch. The blade lifting switch 51 may be moved or twisted, has a third position and a fourth position, and moves between the third position and the fourth position. Optionally, when the blade lifting switch 51 is at an original position, the blade lifting switch 51 is in an off state; when the blade lifting switch 51 is at the third position, the blade lifting motion is in the first mode; and when the blade lifting switch 51 is at the fourth position, the blade lifting motion is in the second mode. Optionally, the original position is in the middle of the third position and the fourth position, or the third position is in the middle of the fourth position and the original position.

**In** some examples, the blade lifting switch 51 may be provided with a biasing element, where a peripheral side of the biasing element abuts against an inner wall of the blade lifting switch 51 and two ends of the biasing element abut against an inner wall of the housing 11 separately, so as to provide a restoring force when the blade lifting switch 51 moves between the original position, the third position, and the fourth position so that the blade lifting switch 51 is automatically reset from the third position or the fourth position to the original position, thereby ensuring the touch of use and convenient operation.

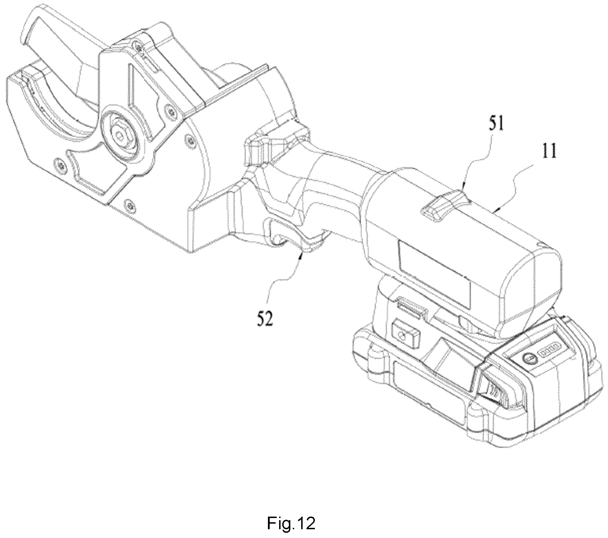

As shown in FIG. 12, components of example three the same as or similar to those of example one and example two use the same reference numerals. For ease of description, only differences with example one and example two are described in example three.

In some examples, as shown in FIG. 12, the blade lifting switch 51 may be a key switch or a reset switch. When the blade lifting switch 51 is in an original state, the blade lifting switch 51 is in the off state; when the blade lifting switch 51 is turned on once, the blade lifting motion is in the second mode; and when the blade lifting switch 51 is continually turned on at least twice, the blade lifting motion is in the first mode.

If it is set that the first mode is started when the blade lifting switch 51 is turned on once and the second mode is started when the blade lifting switch 51 is turned on at least twice, the cutting unit 20 may be lifted rapidly since the user fails to continually turn the blade lifting switch 51 on in time when slow blade lifting is required and danger may occur if the user fails to respond in time. Therefore, for safety reasons, it is set in some examples that the second mode is started when the blade lifting switch 51 is turned on once and the first mode is started when the blade lifting switch 51 is turned on at least twice. A time for waiting for the number of times the blade lifting switch 51 is turned on may be set to be greater than or equal to 0.3s and less than or equal to 1.5s. Specifically, a preset waiting time may be 0.5s, 1s, 1.5s, or 2s.

A second aspect of the present application provides a power tool 10 including a housing 11 and a cutting unit 20. The housing 11 includes a support portion 111, and the cutting unit 20 is used for cutting a target object. The cutting unit 20 is configured to be movable relative to the support portion 111 to a first position and a second position, and the cutting unit 20 implements a blade lifting motion when moving from the first position to the second position. The blade lifting motion includes a first mode and a second mode. In the first mode, a time for the cutting unit 20 to implement the blade lifting motion is a first blade lifting time t1; and in the second mode, a time for the cutting unit 20 to implement the blade lifting motion is a second blade lifting time t2. The first blade lifting time t1 is less than the second blade lifting time t2. The power tool 10 provided by the applicant can meet different requirements of a user, has high cutting efficiency, and is convenient to operate.

In some examples, the first blade lifting time t1 is less than or equal to 1s. Optionally, the second blade lifting time t2 is less than or equal to 3s. The ratio of the first blade lifting time t1 to the second blade lifting time t2 is k1. Optionally, 0.1 ≤ k1 < 1 or 0.2 ≤ k1 ≤ 0.5. Optionally, the value of k1 may be 1/2, 1/3, 1/4, 1/5, or 1/10.

In some examples, in the first mode and the second mode, the cutting unit 20 implements the blade lifting motion at the same speed. Due to different blade lifting times, the cutting unit 20 reaches different second positions, that is, the angle between the cutting unit 20 and the support portion 111 is different, so as to meet the requirement for cutting pipes with different diameters.

A third aspect of the present application provides a power tool 10 including a housing 11 and a cutting unit 20. The housing 11 includes a support portion 111, and the cutting unit 20 is used for cutting a target object. The cutting unit 20 is configured to be movable relative to the support portion 111 to a first position and a second position, and the cutting unit 20 implements a blade lifting motion when moving from the first position to the second position. The blade lifting motion includes a first mode and a second mode. In the first mode, the cutting unit 20 implements the blade lifting motion at a first blade lifting speed v1; and in the second mode, the cutting unit 20 implements the blade lifting motion at a second blade lifting speed v2. The first blade lifting speed v1 is greater than the second blade lifting speed v2. The power tool 10 provided by the applicant can meet different requirements of a user, has high cutting efficiency, and is convenient to operate.

The ratio of the first blade lifting speed v1 to the second blade lifting speed v2 is k2. Optionally, 1 < k2 ≤ 10 or 2 ≤ k2 ≤ 5. Optionally, the value of k2 may be 1.5, 2, 3, 4, 5, or 10.

The basic principles, main features, and advantages of this application are shown and described above.

## Claims

1. A power tool (10), comprising:
a housing (11) comprising a support portion (111);
a cutting unit (20) for cutting a target object; and
a driving device (40) configured to drive the cutting unit (20), wherein the cutting unit (20) moves between a first position and a second position relative to the support portion (111) under the action of the driving device (40); wherein
the cutting unit (20) implements a blade lifting motion under the action of the driving device (40), wherein the cutting unit (20) moves from the first position to the second position; **characterized in that**
the blade lifting motion comprises a first mode and a second mode; in the first mode, a time for the cutting unit (20) to implement the blade lifting motion is a first blade lifting time (t1); and in the second mode, a time for the cutting unit (20) to implement the blade lifting motion is a second blade lifting time (t2); wherein the first blade lifting time (t1) is less than the second blade lifting time (t2).

2. The power tool (10) according to claim 1, wherein the cutting unit (20) is further configured to implement a cutting motion under the action of the driving device (40) wherein the cutting unit (20) moves from the second position to the first position, and a time for the cutting unit (20) to implement the cutting motion is a cutting time (t3); wherein the cutting time (t3) is greater than or equal to the first blade lifting time (t1).

3. The power tool (10) according to claim 1, further comprising a blade lifting switch (51) configured to be operated such that the blade lifting switch (51) is in a first operation mode and a second operation mode, wherein when the blade lifting switch (51) is in the first operation mode, the blade lifting motion is in the first mode; and when the blade lifting switch (51) is in the second operation mode, the blade lifting motion is in the second mode.

4. The power tool (10) according to claim 3, wherein the housing (11) further comprises a handle portion (112) for an operator to hold, and the blade lifting switch (51) is disposed on the handle portion (112).

5. The power tool (10) according to claim 4, wherein the blade lifting switch (51) penetrates through the handle portion (112), and two ends of the blade lifting switch (51) extend out from two sides of the handle portion (112) separately.

6. The power tool (10) according to claim 3, wherein the blade lifting switch (51) comprises a first blade lifting switch (511) and a second blade lifting switch (512), wherein when the first blade lifting switch (511) is turned on, the blade lifting switch (51) is in the first operation mode and the blade lifting motion is in the first mode; and when the second blade lifting switch (512) is turned on, the blade lifting switch (51) is in the second operation mode and the blade lifting motion is in the second mode.

7. The power tool (10) according to claim 3, wherein the blade lifting switch (51) has an original position, a third position and a fourth position, and when the blade lifting switch (51) is at the original position, the blade lifting switch (51) is in an off state; when the blade lifting switch (51) is at the third position, the blade lifting motion is in the first mode; and when the blade lifting switch (51) is at the fourth position, the blade lifting motion is in the second mode.

8. The power tool (10) according to claim 7, wherein the original position is in a middle of the third position and the fourth position, or the fourth position is in a middle of the third position and the original position.

9. The power tool (10) according to claim 3, wherein when the blade lifting switch (51) is in an original state, the blade lifting switch (51) is in an off state; when the blade lifting switch (51) is turned on once, the blade lifting motion is in the second mode; and when the blade lifting switch (51) is continually turned on at least twice, the blade lifting motion is in the first mode.

10. The power tool (10) according to claim 1, further comprising a transmission device (30) for connecting the driving device (40) to the cutting unit (20), wherein the driving device (40) drives, via the transmission device, the cutting unit (20) to implement the blade lifting motion, wherein a number of transmission stages of the transmission device in the first mode is less than a number of transmission stages of the transmission device in the second mode.

11. The power tool (10) according to claim 1, wherein the driving device (40) further comprises an electric motor (41), wherein the electric motor (41) has first power in the first mode; and the electric motor (41) has second power in the second mode; wherein the first power is greater than the second power.

12. The power tool (10) according to claim 1, wherein a ratio of the first blade lifting time (t1) to the second blade lifting time (t2) is greater than or equal to 0.1 and less than 1.

13. The power tool (10) according to claim 12, wherein the first blade lifting time (t1) is less than or equal to 1 second.

14. The power tool (10) according to claim 1, further comprising a controller (60) configured to cause, according to a mode of the blade lifting motion, the driving device (40) to stop within a preset ending time (t0), wherein
in the first mode, the preset ending time (t0) is equal to the first blade lifting time (t1); and
in the second mode, the preset ending time (t0) is equal to the second blade lifting time (t2).

15. The power tool (10) according to claim 14, further comprising a battery pack (12) for powering the driving device (40), wherein the higher a voltage of the battery pack (12), the shorter the preset ending time (t0).

## Patentansprüche

1. Kraftbetriebenes Werkzeug (10), umfassend:
ein Gehäuse (11), das einen Stützabschnitt (111) umfasst;
eine Schneideinheit (20) zum Schneiden eines Zielobjekts; und
eine Antriebsvorrichtung (40), die dazu eingerichtet ist, die Schneideinheit (20) anzutreiben, wobei sich die Schneideinheit (20) unter der Einwirkung der Antriebsvorrichtung (40) zwischen einer ersten Position und einer zweiten Position relativ zu dem Stützabschnitt (111) bewegt; wobei
die Schneideinheit (20) unter der Einwirkung der Antriebsvorrichtung (40) eine Klingenhubbewegung ausführt, wobei sich die Schneideinheit (20) von der ersten Position in die zweite Position bewegt; **dadurch gekennzeichnet, dass**
die Klingenhubbewegung einen ersten Modus und einen zweiten Modus umfasst; in dem ersten Modus eine Zeit, in der die Schneideinheit (20) die Klingenhubbewegung ausführt, eine erste Klingenhubzeit (t1) ist; und in dem zweiten Modus eine Zeit, in der die Schneideinheit (20) die Klingenhubbewegung ausführt, eine zweite Klingenhubzeit (t2) ist; wobei die erste Klingenhubzeit (t1) kürzer als die zweite Klingenhubzeit (t2) ist.

2. Kraftbetriebenes Werkzeug (10) nach Anspruch 1, wobei die Schneideinheit (20) ferner dazu eingerichtet ist, unter der Einwirkung der Antriebsvorrichtung (40) eine Schneidbewegung auszuführen, wobei sich die Schneideinheit (20) von der zweiten Position in die erste Position bewegt, und eine Zeit, in der die Schneideinheit (20) die Schneidbewegung ausführt, eine Schneidzeit (t3) ist; wobei die Schneidzeit (t3) länger als oder gleich der ersten Klingenhubzeit (t1) ist.

3. Kraftbetriebenes Werkzeug (10) nach Anspruch 1, ferner umfassend einen Klingenhubschalter (51), der dazu eingerichtet ist, so betätigt zu werden, dass sich der Klingenhubschalter (51) in einem ersten Betätigungsmodus und einem zweiten Betätigungsmodus befindet, wobei, wenn sich der Klingenhubschalter (51) in dem ersten Betätigungsmodus befindet, die Klingenhubbewegung in dem ersten Modus ist; und wenn sich der Klingenhubschalter (51) in dem zweiten Betätigungsmodus befindet, die Klingenhubbewegung in dem zweiten Modus ist.

4. Kraftbetriebenes Werkzeug (10) nach Anspruch 3, wobei das Gehäuse (11) ferner einen Griffabschnitt (112) zum Halten durch einen Bediener umfasst und der Klingenhubschalter (51) an dem Griffabschnitt (112) angeordnet ist.

5. Kraftbetriebenes Werkzeug (10) nach Anspruch 4, wobei der Klingenhubschalter (51) den Griffabschnitt (112) durchdringt und zwei Enden des Klingenhubschalters (51) jeweils an zwei Seiten des Griffabschnitts (112) herausragen.

6. Kraftbetriebenes Werkzeug (10) nach Anspruch 3, wobei der Klingenhubschalter (51) einen ersten Klingenhubschalter (511) und einen zweiten Klingenhubschalter (512) umfasst, wobei, wenn der erste Klingenhubschalter (511) eingeschaltet wird, sich der Klingenhubschalter (51) in dem ersten Betätigungsmodus befindet und die Klingenhubbewegung in dem ersten Modus ist; und wenn der zweite Klingenhubschalter (512) eingeschaltet wird, sich der Klingenhubschalter (51) in dem zweiten Betätigungsmodus befindet und die Klingenhubbewegung in dem zweiten Modus ist.

7. Kraftbetriebenes Werkzeug (10) nach Anspruch 3, wobei der Klingenhubschalter (51) eine Ausgangsposition, eine dritte Position und eine vierte Position aufweist und, wenn sich der Klingenhubschalter (51) in der Ausgangsposition befindet, der Klingenhubschalter (51) in einem ausgeschalteten Zustand ist; wenn sich der Klingenhubschalter (51) in der dritten Position befindet, die Klingenhubbewegung in dem ersten Modus ist; und wenn sich der Klingenhubschalter (51) in der vierten Position befindet, die Klingenhubbewegung in dem zweiten Modus ist.

8. Kraftbetriebenes Werkzeug (10) nach Anspruch 7, wobei die Ausgangsposition in der Mitte zwischen der dritten Position und der vierten Position liegt oder die vierte Position in der Mitte zwischen der dritten Position und der Ausgangsposition liegt.

9. Kraftbetriebenes Werkzeug (10) nach Anspruch 3, wobei, wenn sich der Klingenhubschalter (51) in einem Ausgangszustand befindet, der Klingenhubschalter (51) in einem ausgeschalteten Zustand ist; wenn der Klingenhubschalter (51) einmal eingeschaltet wird, die Klingenhubbewegung in dem zweiten Modus ist; und wenn der Klingenhubschalter (51) mindestens zweimal hintereinander eingeschaltet wird, die Klingenhubbewegung in dem ersten Modus ist.

10. Kraftbetriebenes Werkzeug (10) nach Anspruch 1, ferner umfassend eine Übertragungsvorrichtung (30) zum Verbinden der Antriebsvorrichtung (40) mit der Schneideinheit (20), wobei die Antriebsvorrichtung (40) die Schneideinheit (20) über die Übertragungsvorrichtung zur Ausführung der Klingenhubbewegung antreibt, wobei eine Anzahl von Übertragungsstufen der Übertragungsvorrichtung in dem ersten Modus kleiner als eine Anzahl von Übertragungsstufen der Übertragungsvorrichtung in dem zweiten Modus ist.

11. Kraftbetriebenes Werkzeug (10) nach Anspruch 1, wobei die Antriebsvorrichtung (40) ferner einen Elektromotor (41) umfasst, wobei der Elektromotor (41) in dem ersten Modus eine erste Leistung aufweist; und der Elektromotor (41) in dem zweiten Modus eine zweite Leistung aufweist; wobei die erste Leistung größer als die zweite Leistung ist.

12. Kraftbetriebenes Werkzeug (10) nach Anspruch 1, wobei ein Verhältnis der ersten Klingenhubzeit (t1) zu der zweiten Klingenhubzeit (t2) größer als oder gleich 0,1 und kleiner als 1 ist.

13. Kraftbetriebenes Werkzeug (10) nach Anspruch 12, wobei die erste Klingenhubzeit (t1) kürzer als oder gleich 1 Sekunde ist.

14. Kraftbetriebenes Werkzeug (10) nach Anspruch 1, ferner umfassend eine Steuerung (60), die dazu eingerichtet ist, die Antriebsvorrichtung (40) gemäß einem Modus der Klingenhubbewegung innerhalb einer voreingestellten Endzeit (t0) anzuhalten, wobei
in dem ersten Modus die voreingestellte Endzeit (t0) gleich der ersten Klingenhubzeit (t1) ist; und
in dem zweiten Modus die voreingestellte Endzeit (t0) gleich der zweiten Klingenhubzeit (t2) ist.

15. Kraftbetriebenes Werkzeug (10) nach Anspruch 14, ferner umfassend einen Batteriepack (12) zum Versorgen der Antriebsvorrichtung (40) mit Energie, wobei die voreingestellte Endzeit (t0) umso kürzer ist, je höher eine Spannung des Batteriepacks (12) ist.

## Revendications

1. Outil motorisé (10), comprenant :
un boîtier (11) comprenant une partie de support (111) ;
une unité de coupe (20) destinée à couper un objet cible ; et
un dispositif d'entraînement (40) configuré pour entraîner l'unité de coupe (20), dans lequel l'unité de coupe (20) se déplace entre une première position et une deuxième position par rapport à la partie de support (111) sous l'action du dispositif d'entraînement (40) ; dans lequel
l'unité de coupe (20) effectue un mouvement de levage de lame sous l'action du dispositif d'entraînement (40), dans lequel l'unité de coupe (20) se déplace de la première position à la deuxième position ; **caractérisé en ce que**
le mouvement de levage de lame comprend un premier mode et un deuxième mode ; dans le premier mode, une durée pendant laquelle l'unité de coupe (20) effectue le mouvement de levage de lame est une première durée de levage de lame (t1) ; et dans le deuxième mode, une durée pendant laquelle l'unité de coupe (20) effectue le mouvement de levage de lame est une deuxième durée de levage de lame (t2) ; dans lequel la première durée de levage de lame (t1) est inférieure à la deuxième durée de levage de lame (t2).

2. Outil motorisé (10) selon la revendication 1, dans lequel l'unité de coupe (20) est en outre configurée pour effectuer un mouvement de coupe sous l'action du dispositif d'entraînement (40), dans lequel l'unité de coupe (20) se déplace de la deuxième position à la première position, et une durée pendant laquelle l'unité de coupe (20) effectue le mouvement de coupe est une durée de coupe (t3) ; dans lequel la durée de coupe (t3) est supérieure ou égale à la première durée de levage de lame (t1).

3. Outil motorisé (10) selon la revendication 1, comprenant en outre un commutateur de levage de lame (51) configuré pour être actionné de sorte que le commutateur de levage de lame (51) se trouve dans un premier mode de fonctionnement et un deuxième mode de fonctionnement, dans lequel, lorsque le commutateur de levage de lame (51) se trouve dans le premier mode de fonctionnement, le mouvement de levage de lame est dans le premier mode ; et lorsque le commutateur de levage de lame (51) se trouve dans le deuxième mode de fonctionnement, le mouvement de levage de lame est dans le deuxième mode.

4. Outil motorisé (10) selon la revendication 3, dans lequel le boîtier (11) comprend en outre une partie de poignée (112) destinée à être tenue par un opérateur, et le commutateur de levage de lame (51) est disposé sur la partie de poignée (112).

5. Outil motorisé (10) selon la revendication 4, dans lequel le commutateur de levage de lame (51) traverse la partie de poignée (112), et deux extrémités du commutateur de levage de lame (51) font respectivement saillie hors de deux côtés de la partie de poignée (112).

6. Outil motorisé (10) selon la revendication 3, dans lequel le commutateur de levage de lame (51) comprend un premier commutateur de levage de lame (511) et un deuxième commutateur de levage de lame (512), dans lequel, lorsque le premier commutateur de levage de lame (511) est activé, le commutateur de levage de lame (51) se trouve dans le premier mode de fonctionnement et le mouvement de levage de lame est dans le premier mode ; et lorsque le deuxième commutateur de levage de lame (512) est activé, le commutateur de levage de lame (51) se trouve dans le deuxième mode de fonctionnement et le mouvement de levage de lame est dans le deuxième mode.

7. Outil motorisé (10) selon la revendication 3, dans lequel le commutateur de levage de lame (51) présente une position initiale, une troisième position et une quatrième position, et lorsque le commutateur de levage de lame (51) se trouve dans la position initiale, le commutateur de levage de lame (51) est dans un état désactivé ; lorsque le commutateur de levage de lame (51) se trouve dans la troisième position, le mouvement de levage de lame est dans le premier mode ; et lorsque le commutateur de levage de lame (51) se trouve dans la quatrième position, le mouvement de levage de lame est dans le deuxième mode.

8. Outil motorisé (10) selon la revendication 7, dans lequel la position initiale se situe au milieu entre la troisième position et la quatrième position, ou la quatrième position se situe au milieu entre la troisième position et la position initiale.

9. Outil motorisé (10) selon la revendication 3, dans lequel, lorsque le commutateur de levage de lame (51) se trouve dans un état initial, le commutateur de levage de lame (51) est dans un état désactivé ; lorsque le commutateur de levage de lame (51) est activé une fois, le mouvement de levage de lame est dans le deuxième mode ; et lorsque le commutateur de levage de lame (51) est activé au moins deux fois de suite, le mouvement de levage de lame est dans le premier mode.

10. Outil motorisé (10) selon la revendication 1, comprenant en outre un dispositif de transmission (30) destiné à relier le dispositif d'entraînement (40) à l'unité de coupe (20), dans lequel le dispositif d'entraînement (40) entraîne, par l'intermédiaire du dispositif de transmission, l'unité de coupe (20) pour effectuer le mouvement de levage de lame, dans lequel un nombre d'étages de transmission du dispositif de transmission dans le premier mode est inférieur à un nombre d'étages de transmission du dispositif de transmission dans le deuxième mode.

11. Outil motorisé (10) selon la revendication 1, dans lequel le dispositif d'entraînement (40) comprend en outre un moteur électrique (41), dans lequel le moteur électrique (41) présente une première puissance dans le premier mode ; et le moteur électrique (41) présente une deuxième puissance dans le deuxième mode ; dans lequel la première puissance est supérieure à la deuxième puissance.

12. Outil motorisé (10) selon la revendication 1, dans lequel un rapport de la première durée de levage de lame (t1) à la deuxième durée de levage de lame (t2) est supérieur ou égal à 0,1 et inférieur à 1.

13. Outil motorisé (10) selon la revendication 12, dans lequel la première durée de levage de lame (t1) est inférieure ou égale à 1 seconde.

14. Outil motorisé (10) selon la revendication 1, comprenant en outre un dispositif de commande (60) configuré pour amener, selon un mode du mouvement de levage de lame, le dispositif d'entraînement (40) à s'arrêter dans un délai de fin prédéfini (t0), dans lequel
dans le premier mode, le délai de fin prédéfini (t0) est égal à la première durée de levage de lame (t1) ; et
dans le deuxième mode, le délai de fin prédéfini (t0) est égal à la deuxième durée de levage de lame (t2).

15. Outil motorisé (10) selon la revendication 14, comprenant en outre un bloc-batterie (12) destiné à alimenter le dispositif d'entraînement (40), dans lequel plus une tension du bloc-batterie (12) est élevée, plus le délai de fin prédéfini (t0) est court.
